# EUROPEAN PATENT APPLICATION

(11) **EP 4 451 082 A1**
(43) Date of publication of application: **23.10.2024**
(21) Application number: 22906904.2
(22) Date of filing: 11.07.2022
(51) Int. Cl.: G05D 1/00, G08G 1/09, G08G 1/16, B60W 50/00, B60W 60/00

(54) **INFORMATION OUTPUT METHOD AND INFORMATION OUTPUT DEVICE**

(30) Priority: 13.12.2021 JP 2021202070
(71) Applicant: Panasonic Intellectual Property Management Co., Ltd., Kadoma-shi, Osaka 571-0057 (JP)
(72) Inventor: ANABUKI, Motoshi, Kadoma-shi, Osaka 571-0057 (JP); OYA, Akihisa, Kadoma-shi, Osaka 571-0057 (JP); TONOIKE, Takumi, Kadoma-shi, Osaka 571-0057 (JP); ARAI, Toshiya, Kadoma-shi, Osaka 571-0057 (JP); KUHARA, Shunsuke, Kadoma-shi, Osaka 571-0057 (JP)
(74) Representative: Novagraaf International SA
(86) International application number: PCT/JP2022/027243
(87) International publication number: WO 2023/112367

(57) **Abstract**

An information output method according to an aspect of the present disclosure includes: obtaining first information regarding a region that includes a travel route on which a mobile object travels (S10); obtaining second information regarding an object that is present in the region (S20); generating, for each of one or more points in the region, third information regarding a return of the mobile object to the travel route from the point, based on at least one of the first information or the second information, the one or more points being points at which the mobile object is likely to stop, (S30); and outputting the third information (S40).

## Description

### [Technical Field]

The present disclosure relates to an information output method and an information output device.

### [Background Art]

In recent years, the technology relating to mobile objects, such as self-driving vehicles, has been developing (see, for example, Patent Literature (PTL) 1).

PTL 1 discloses a device that includes: a situation detection means for detecting situations ahead of and around the road on which a vehicle is traveling; and a stop position determination means for determining a position at which the vehicle will be stopped, on the basis of the detection result obtained by the situation detection means.

### [Citation List]

### [Patent Literature]

[PTL 1] Japanese Unexamined Patent Application Publication No. 2007-331652

### [Summary of Invention]

### [Technical Problem]

Mobile objects are desired, for example, to efficiently travel to destinations.

The present disclosure provides an information output method and so forth capable of causing a mobile object to travel efficiently.

### [Solution to Problem]

The information output method according to an aspect of the present disclosure is an information output method for use in an information output device, the information output method including: obtaining first information regarding a region that includes a travel route on which a mobile object travels; obtaining second information regarding an object that is present in the region; generating, for each of one or more points in the region, third information regarding a return of the mobile object to the travel route from the point, based on at least one of the first information or the second information, the one or more points being points at which the mobile object is likely to stop; and outputting the third information.

### [Advantageous Effects of Invention]

With the information output method and so forth according to an aspect of the present disclosure, it is possible to provide an information output method and so forth capable of causing a mobile object to travel efficiently.

### [Brief Description of Drawings]

[FIG. 1]

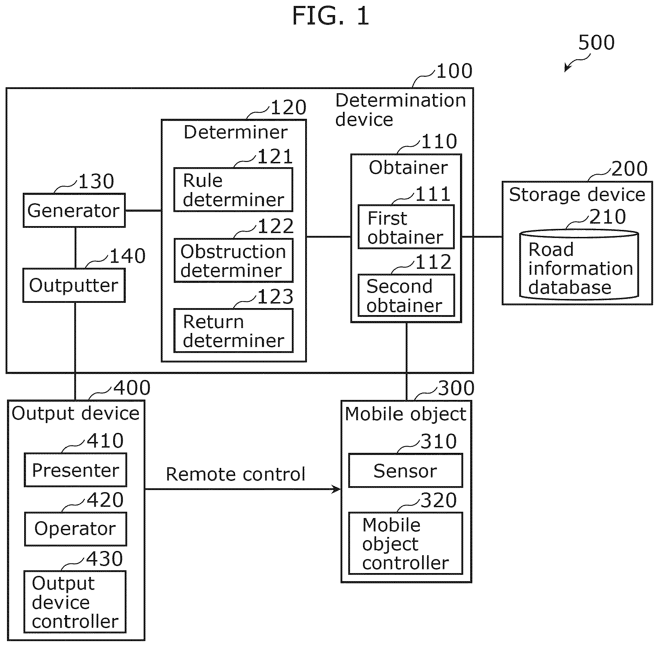

   FIG. 1 is a block diagram showing the configuration of an information output system according to an embodiment.
[FIG. 2]

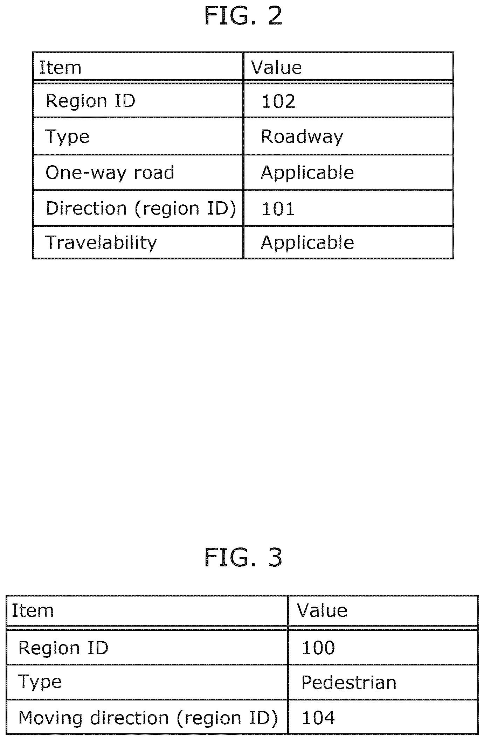

   FIG. 2 is a diagram showing Example 1 of road information according to the embodiment.
[FIG. 3]
   FIG. 3 is a diagram showing object information according to the embodiment.
[FIG. 4]

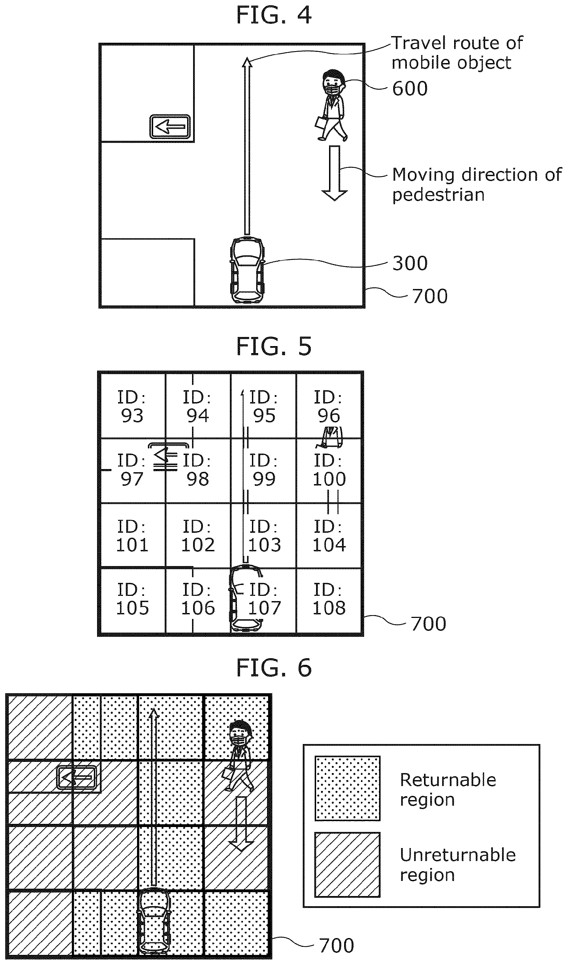

   FIG. 4 is a diagram schematically showing the traveling of a mobile object in a target region according to the embodiment.
[FIG. 5]
   FIG. 5 is a diagram for explaining a plurality of individual regions in the target region according to the embodiment.
[FIG. 6]
   FIG. 6 is a diagram for explaining returnable regions and unreturnable regions according to the embodiment.
[FIG. 7]

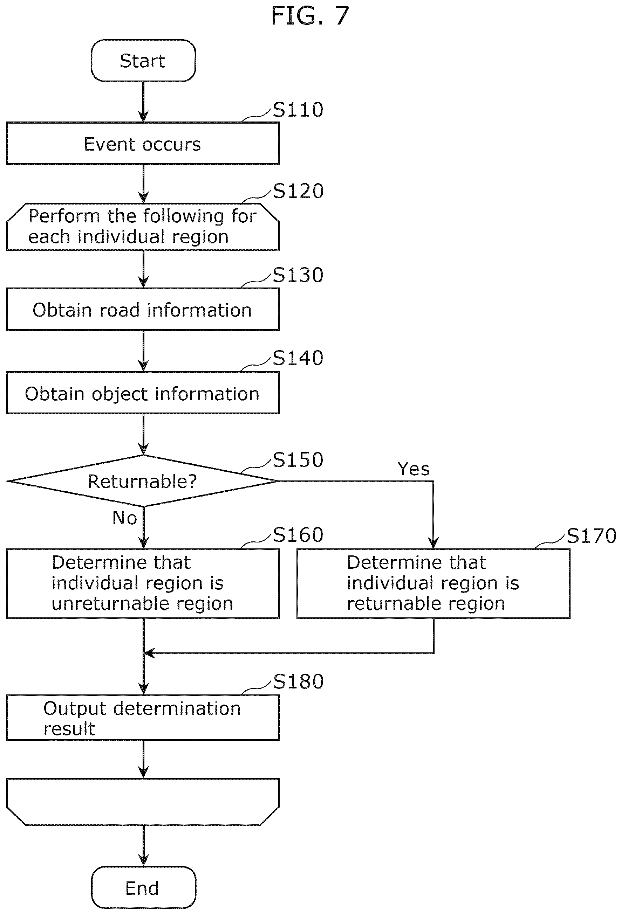

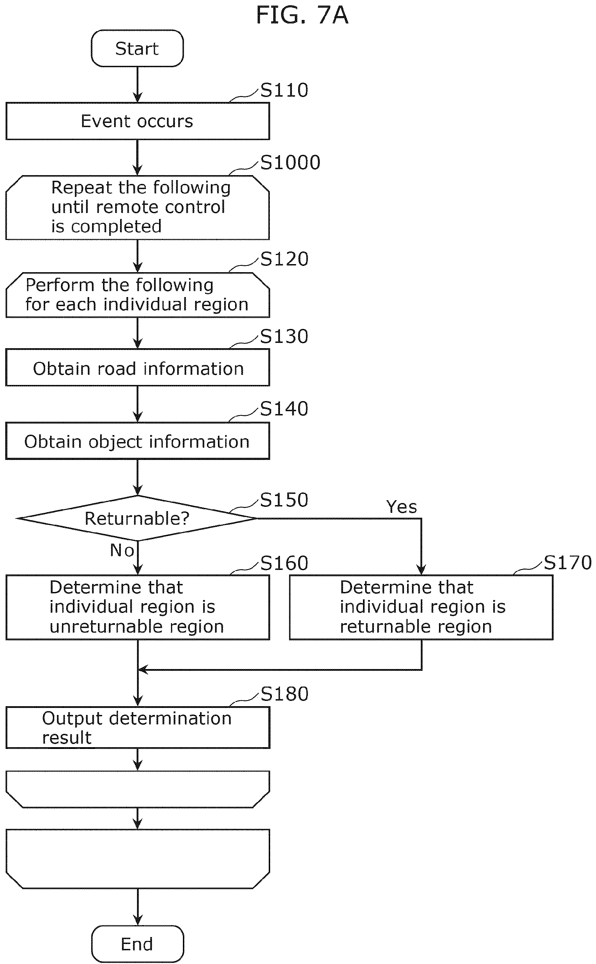

   FIG. 7 is a flowchart showing Example 1 of the procedure of processing performed by a determination device according to the embodiment.
[FIG. 7A]
   FIG. 7A is a flowchart showing another example of Example 1 of the procedure of the processing performed by the determination device according to the embodiment.
[FIG. 8]

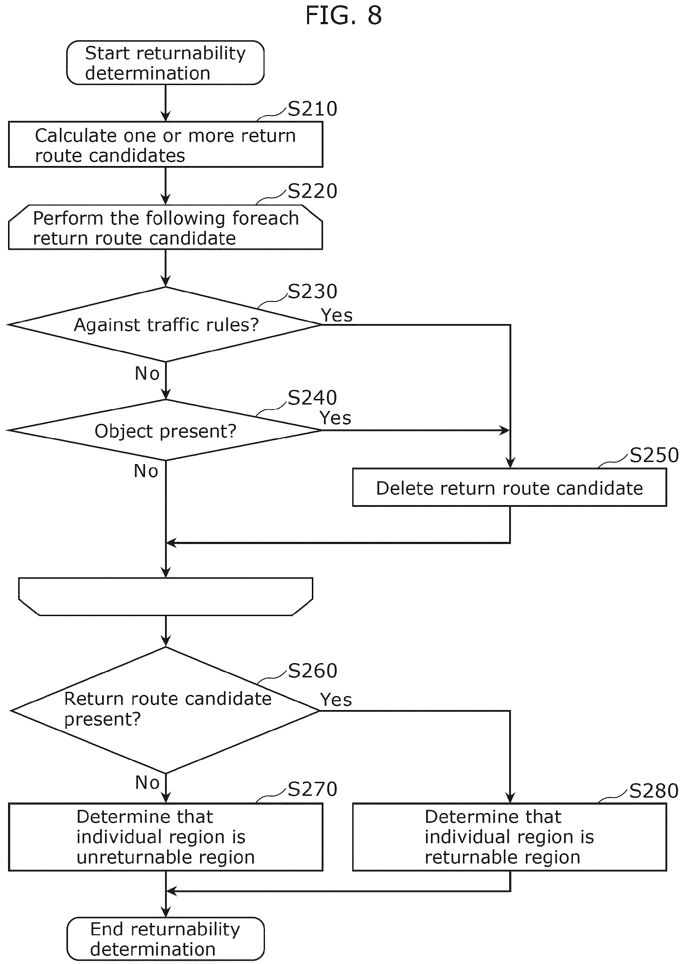

   FIG. 8 is a flowchart showing the procedure of processing of returnability determination performed by the determination device according to the embodiment.
[FIG. 9]

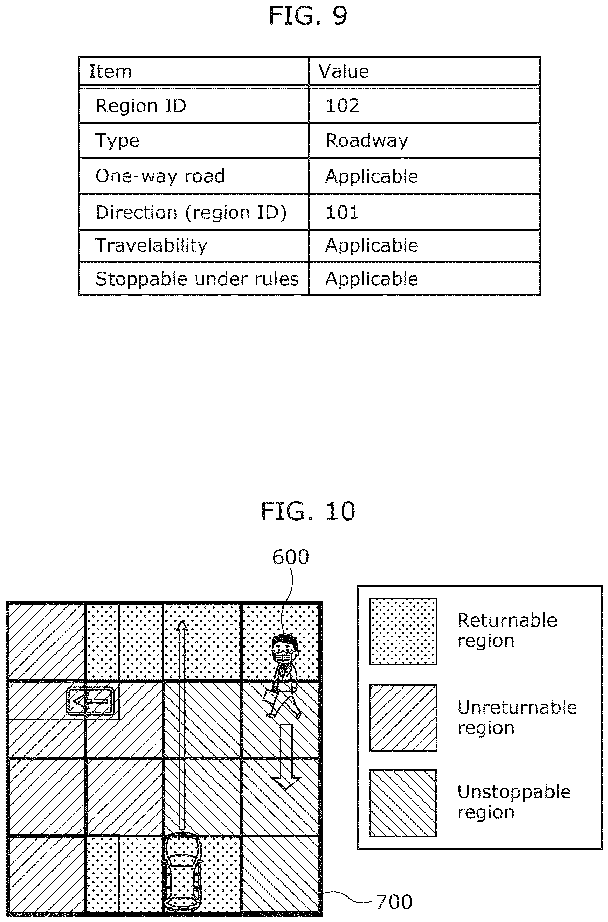

   FIG. 9 is a diagram showing Example 2 of the road information according to the embodiment.
[FIG. 10]
   FIG. 10 is a diagram for explaining unstoppable regions according to the embodiment.
[FIG. 11]

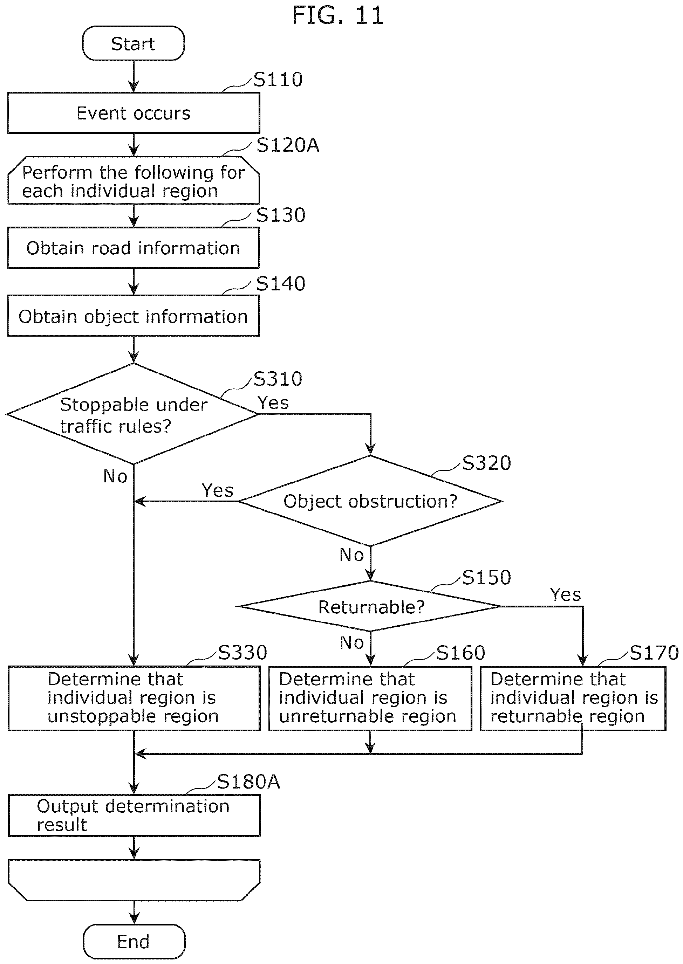

   FIG. 11 is a flowchart showing Example 2 of the procedure of the processing performed by the determination device according to the embodiment.
[FIG. 12]

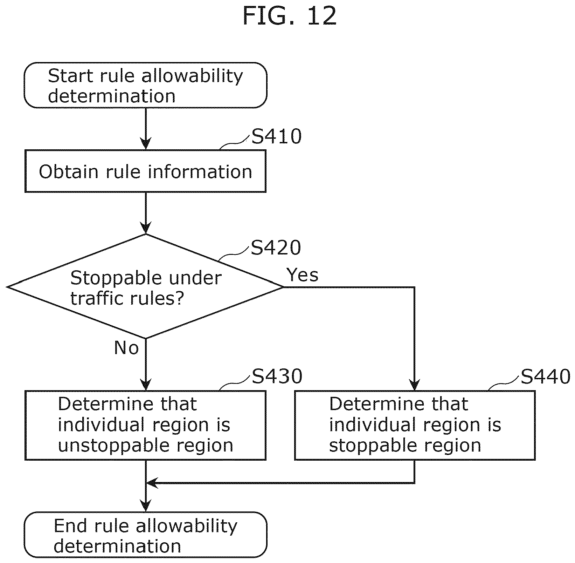

   FIG. 12 is a flowchart showing the procedure of processing of rule allowability determination performed by the determination device according to the embodiment.
[FIG. 13]

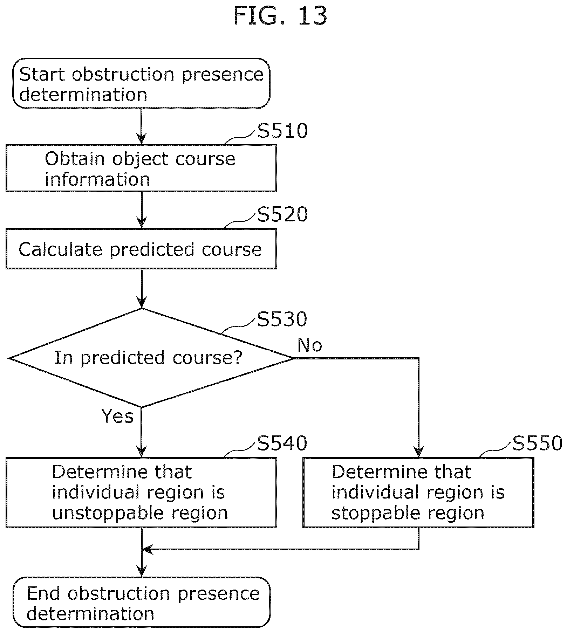

   FIG. 13 is a flowchart showing the procedure of processing of obstruction presence determination performed by the determination device according to the embodiment.
[FIG. 14]

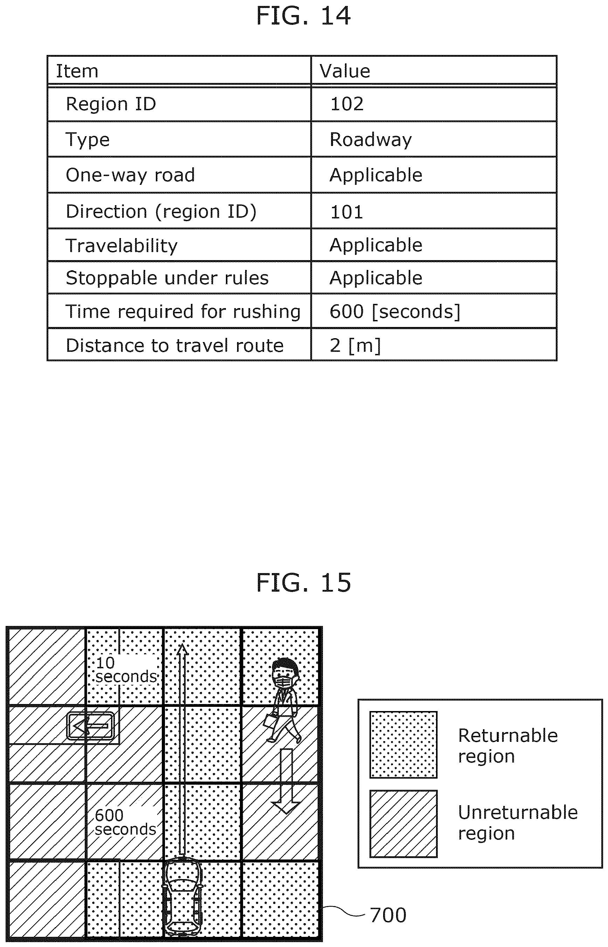

   FIG. 14 is a diagram showing Example 3 of the road information according to the embodiment.
[FIG. 15]

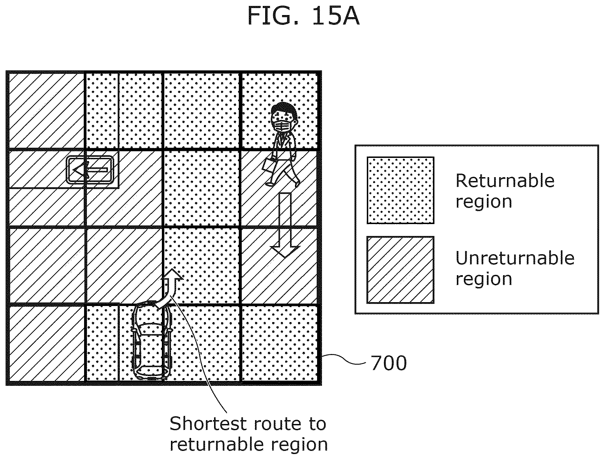

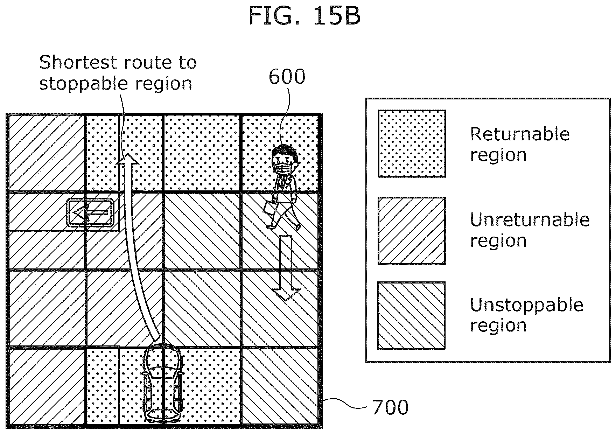

   FIG. 15 is a diagram showing an example of return time information displayed by an output device according to the embodiment.
[FIG. 15A]
   FIG. 15A is a diagram showing another example of the return time information displayed by the output device according to the embodiment.
[FIG. 15B]
   FIG. 15B is a diagram showing another example of the return time information displayed by the output device according to the embodiment.
[FIG. 16]

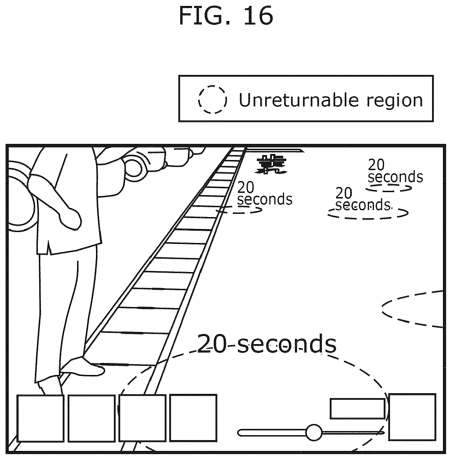

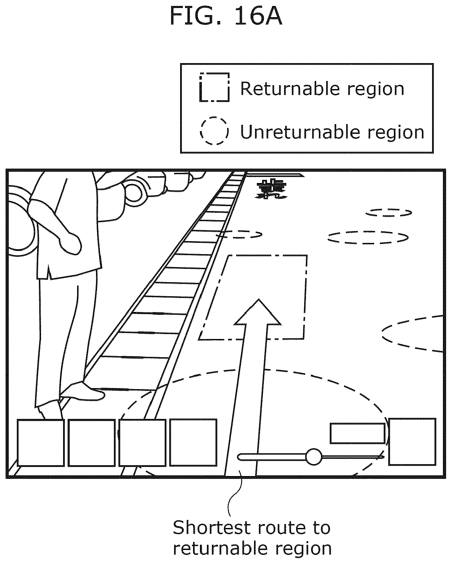

   FIG. 16 is a diagram showing another example of the return time information displayed by the output device according to the embodiment.
[FIG. 16A]
   FIG. 16A is a diagram showing another example of the return time information displayed by the output device according to the embodiment.
[FIG. 17]

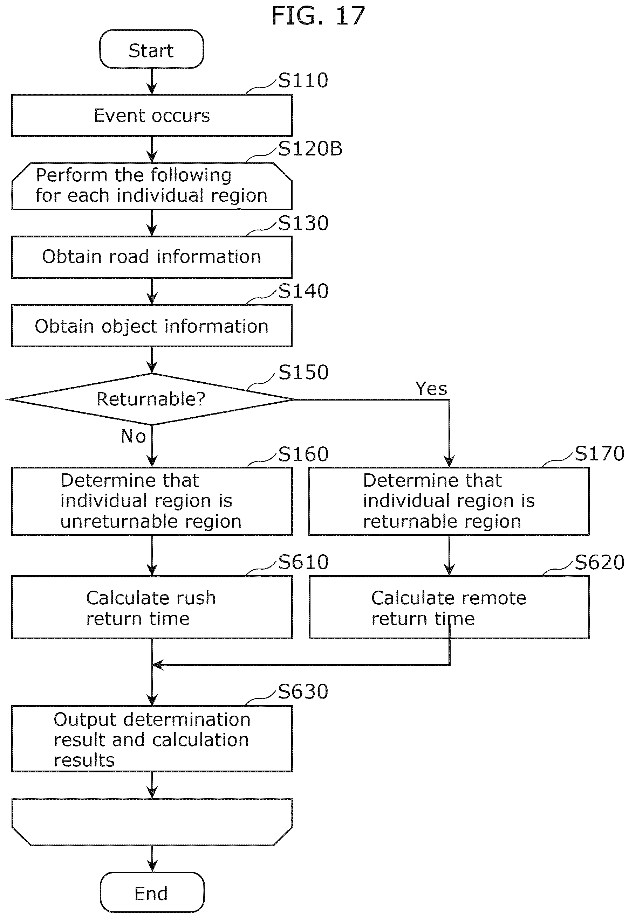

   FIG. 17 is a flowchart showing Example 3 of the procedure of the processing performed by the determination device according to the embodiment.
[FIG. 18]

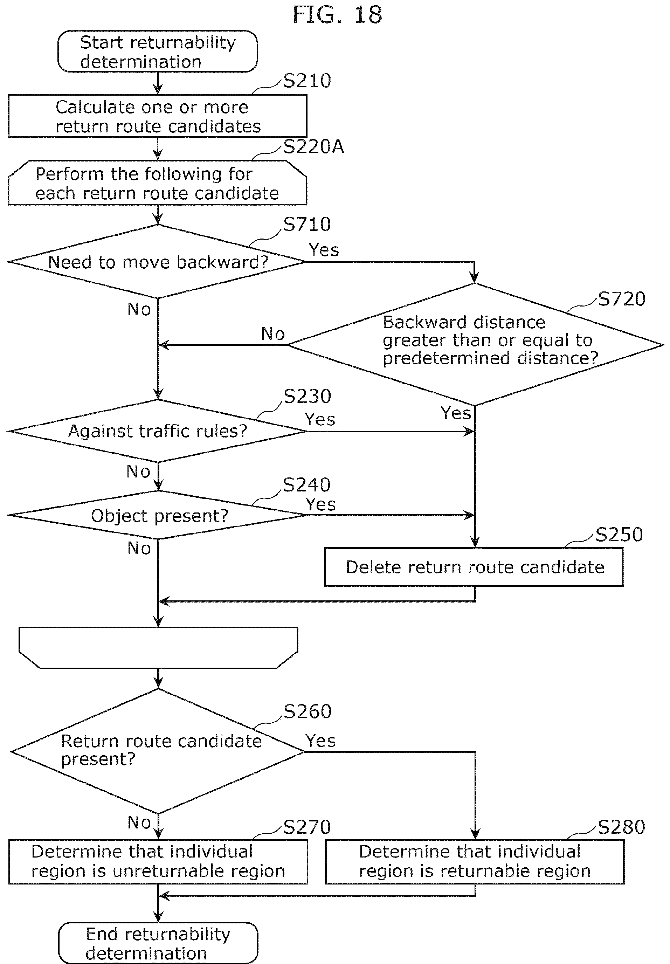

   FIG. 18 is a flowchart showing a variation of the procedure of the processing of returnability determination performed by the determination device according to the embodiment.
[FIG. 19]

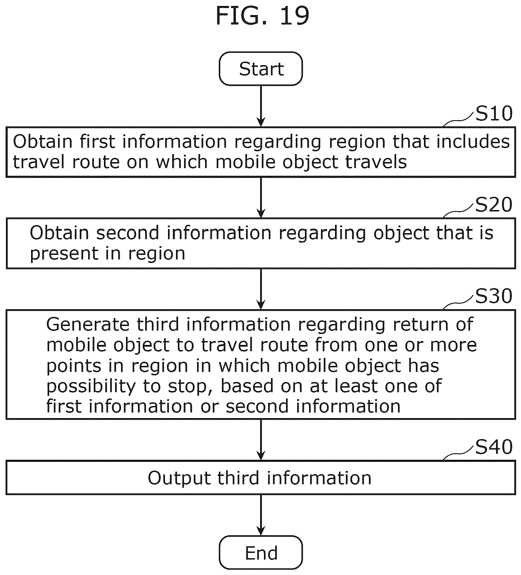

   FIG. 19 is a flowchart showing the procedure of processing performed by an information output device according to the embodiment.

### [Description of Embodiment]

### [Overview of the Present Disclosure]

In the operation of a self-driving mobile object, for example, the mobile object is caused to travel to the destination on a predetermined travel route. When the mobile object is traveling by self-driving on the predetermined travel route, the case can occur where the mobile object has become unable to continue self-driving due to, for example, a change in the weather or traffic conditions. In such a case, it sometimes becomes necessary to manually cause the mobile object to leave the predetermined travel route and stop by remote control or other means. Under such circumstances, the failure of causing the mobile object to move to an appropriate location can result in the failure of the mobile object returning to the predetermined travel route by self-driving. In such a case, it is necessary to manually cause the mobile object to return to the predetermined travel route by remote control or other means. Depending on situations, a worker needs to get into and drive the mobile object to return to the predetermined travel route. As described above, the failure of causing the mobile object to stop at an appropriate location decreases the efficiency of the mobile object traveling to the destination.

Regarding the device disclosed in PTL 1 described above, PTL 1 refers to safely stopping the mobile object, but it does not disclose the technology of causing the mobile object to efficiently travel again after stopping the mobile object. More specifically, PTL 1 fails to disclose the technology of causing the mobile object to efficiently return to the predetermined travel route.

In view of the above, the information output method according to an aspect of the present disclosure is an information output method for use in an information output device. Such information output method includes: obtaining first information regarding a region that includes a travel route on which a mobile object travels; obtaining second information regarding an object that is present in the region; generating, for each of one or more points in the region, third information regarding a return of the mobile object to the travel route from the point, based on at least one of the first information or the second information, the one or more points being points at which the mobile object is likely to stop; and outputting the third information.

With this, information regarding the return to the route (travel route) on which the mobile object was originally traveling is outputted, when the mobile object is stopped. The following information is outputted as the information regarding the return to the travel route: information indicating a route used for the return (return route); information indicating the time required for the return; information indicating whether the mobile object can return to the travel route by remote control, in the case where the mobile object is traveling by remote control; or information indicating whether the mobile object can return to the travel route by self-driving, in the case where the mobile object can travel by self-driving. As such, by the output device such as a display presenting such information to the user who drives and stops the mobile object, it is possible for the user to have a grasp of a point from which the mobile object can efficiently return to the travel route, such as a point from which the return route is short and a point from which the time taken to return to the travel route is short. Thus, with the information output method according to an aspect of the present disclosure, it is possible to appropriately select a point from which the mobile object can efficiently return to the travel route. This thus enables the mobile object to travel efficiently.

Also, for example, the generating of the third information includes: determining, for each of the one or more points, whether the mobile object can return to the travel route from the point, based on at least one of the first information or the second information; and generating the third information that includes returnability information indicating whether the mobile object can return to the travel route from the point.

With this, it is possible to appropriately select a point from which the mobile object can return to the travel route.

Also, for example, the mobile object is capable of self-driving, the travel route is a route on which the mobile object can travel by self-driving, and the generating of the third information includes: determining, for each of the one or more points, whether the mobile object can return to the travel route from the point by self-driving; and generating the third information that includes the returnability information indicating whether the mobile object can return to the travel route from the point by self-driving.

As described above, when the mobile object is traveling by self-driving on a predetermined route, the case can occur where the mobile object has become unable to continue self-driving due to, for example, a change in the weather or traffic conditions. In such a case, it is possible to appropriately stop the mobile object at a point from which the mobile object can return to the travel route by self-d riving.

Also, for example, the generating of the third information includes: calculating, for each of the one or more points, a return route on which the mobile object returns to the travel route from the point, based on the first information; determining whether the mobile object can arrive at the travel route by traveling on the return route, based on at least one of the first information or the second information; determining that the mobile object can return to the travel route from the point, when it is determined that the mobile object can arrive at the travel route; and determining that the mobile object cannot return to the travel route, when it is determined that the mobile object cannot arrive at the travel route.

With this, it is possible to appropriately select a point from which the mobile object can return to the travel route.

Also, for example, the generating of the third information includes: determining, for each of the one or more points, whether the mobile object needs to move backward before the mobile object returns to the travel route from the point; and determining whether the mobile object can return to the travel route from the point, based on a result of the determining indicating whether the mobile object needs to move backward.

High driving skills are required to perform an operation of moving backward a mobile object. In particular, much higher driving skills are required, for example, to move backward the mobile object by remote control or by self-driving than to do so in the mobile object. In view of this, by determining that a point at which the mobile object needs to move backward to return to the travel route is an unreturnable region, it is possible to appropriately select a point from which the mobile object can return to the travel route, without depending on the driving skills of the user who drives the mobile object.

Also, for example, the generating of the third information includes: determining that the mobile object can return to the travel route from the point, when the result of the determining is that the mobile object does not need to move backward; calculating a backward distance that is a distance for which the mobile object moves backward before returning to the travel route from the point, when the result of the determining is that the mobile object needs to move backward; determining that the mobile object cannot return to the travel route from the point, when the backward distance is greater than or equal to a predetermined distance; and determining that the mobile object can return to the travel route from the point, when the backward distance is less than predetermined distance.

As described above, high driving skills are required to perform an operation of moving backward a mobile object. In particular, higher driving skills are required, for example, as the distance is longer for which the mobile object needs to move backward. In view of this, by determining that a point at which the mobile object needs to move backward for a long distance to return to the travel route is an unreturnable region, it is possible to appropriately select a point from which the mobile object can return to the travel route, without depending on the driving skills of the user who drives the mobile object.

Also, for example, the generating of the third information includes: determining, for each of the one or more points, whether the mobile object can stop at each of the point, based on at least one of the first information or the second information; and generating the third information that includes stoppability information indicating whether the mobile object can stop at the point.

There is a point at which the mobile object cannot stop, depending on traffic rules or whether an obstacle (object) such as a pedestrian is present. In view of this, by determining such an unstoppable point, it is possible to stop the mobile object at an appropriate point under the traffic rules, avoiding a pedestrian, etc.

Also, for example, the generating of the third information includes: calculating, for each of the one or more points, return time that is time taken by the mobile object to return to the travel route from the point; and generating the third information that includes return time information indicating the return time.

With this, it is possible to appropriately select a point from which the mobile object can return to the travel route in a time-efficient manner.

Also, for example, the generating of the third information includes: generating the third information that includes shortest point information indicating a point, among the one or more points, from which time taken to return to the travel route is shortest.

With this, the output device including, for example, a display presents the shortest point information to the user who drives and stops the mobile object. This makes it easier for the user to have a grasp of a point from which the mobile object can return to the travel route in the most time-efficient manner.

Also, for example, the generating of the third information includes: generating the third information, based on at least one of the first information or the second information, and performance information indicating traveling performance of the mobile object.

A route on which the mobile object can travel differs depending on the type of the mobile object and the traveling performance such as whether the mobile object is capable of turning in a small space. As such, the above configuration enables, for example, a more appropriate selection of a point from which the mobile object can return to the travel route.

Also, for example, the generating of the third information includes: generating the third information, based on at least one of the first information or the second information, and traffic volume information indicating a traffic volume in the region.

Whether returning to the travel route is easy or not easy depends on the traffic volume. As such, the foregoing configuration enables, for example, a more appropriate selection of a point from which the mobile object can return to the travel route.

Also, for example, the first information includes at least one of: rule information indicating a traffic rule in the region; travelability information indicating whether the mobile object can travel in the region; or distance information indicating a distance from the region to the travel route.

With this, it is possible, for example, to appropriately select a point from which the mobile object can return to the travel route, on the basis of the first information.

Also, for example, the second information indicates whether the object is present in the region, the object being detected by a sensor disposed in the mobile object.

With this, it is possible, for example, to appropriately select a point from which the mobile object can return to the travel route, on the basis of the first information.

Also, for example, the one or more points include a point at which the mobile object is located.

With this, it is possible, for example, to appropriately determine whether any trouble occurs if the mobile object is urgently stopped.

Also, for example, the generating of the third information includes: generating the third information that includes image information in which, among the one or more points, a point from which the mobile object can return to the travel route is represented in a first color and a point from which the mobile object cannot return to the travel route is represented in a second color that is different from the first color.

With this, the output device including, for example, a display presents the image information to the user who drives and stops the mobile object. This makes it easier for the user to have an intuitive grasp of points from which the mobile object can and cannot return to the travel route.

Also, for example, the mobile object operates by remote control performed by a terminal that is connected at least via a network, and the outputting of the third information includes outputting the third information to the terminal.

It is more difficult to remotely control a mobile object than to drive the mobile object thereon. For example, it is sometimes difficult to remotely control the mobile object in a narrow road. In view of this, for example, by outputting, as the information regarding the return to the travel route, information indicating whether the mobile object can return to the travel route by remote control, in the case where the mobile object is traveling by remote control, it is possible to stop the mobile object at a point from which the mobile object can return to the travel route even by remote control.

Also, the information output device according to an aspect of the present disclosure includes: a first obtainer that obtains first information regarding a region that includes a travel route on which a mobile object travels; a second obtainer that obtains second information regarding an object that is present in the region; a generator that generates, for each of one or more points in the region, third information regarding a return of the mobile object to the travel route from the point, based on at least one of the first information or the second information, the one or more points being points at which the mobile object is likely to stop; and an outputter that outputs the third information.

With this, it is possible to achieve the same effects as those achieved by the information output method according to an aspect of the present disclosure.

Note that these general or specific aspects may be configured in the form of a system, a method, an integrated circuit, a computer program, or a non-transitory, computer-readable recording medium such as a CD-ROM, or may be configured using any combination of systems, methods, integrated circuits, computer programs, or non-transitory recording media.

Hereinafter, a certain exemplary embodiment is described in greater detail with reference to the accompanying Drawings.

The exemplary embodiment described below shows a general or specific example of the present disclosure. The numerical values, shapes, materials, elements, the arrangement and connection of the elements, steps, the processing order of the steps, etc. shown in the following exemplary embodiment are mere examples, and therefore do not limit the scope of the present disclosure. Therefore, among the elements in the following exemplary embodiment, those not recited in any one of the independent claims are described as optional elements.

### [Embodiment]

### [Configuration]

First, the configuration of the information output system will be described.

FIG. 1 is a block diagram showing the configuration of information output system 500 according to an embodiment.

Information output system 500 is a system that generates information regarding the return of mobile object 300 to a predetermined travel route from a certain point (region), when mobile object 300 is stopped there while traveling along the predetermined travel route, and presents such information to a user. More specifically, information output system 500 generates the information regarding mobile object 300 going back (i.e., returning) to the predetermined travel route from the point, on the basis of information regarding the road on which mobile object 300 is traveling and its surrounding region (such information is also referred to as "road information") and/or the result of sensing an object such as an obstacle located around mobile object 300 (such result of sensing is also referred to as "object information"). More specifically, information output system 500 determines whether a predetermined region is a region from which mobile object 300 can return to the travel route, on the basis of the road information and the object information, and presents the determination result.

Mobile object 300 travels, for example, toward the destination along the predetermined travel route. Here, assume that mobile object 300 is caused to leave the travel route to temporarily stop. In such a case, information output system 500 presents, to the user who is driving mobile object 300, information regarding the return so that mobile object 300 can return (i.e., go back) to the travel route and/or it is easy for mobile object 300 to return to the travel route from the point at which mobile object 300 is temporarily stopped. For example, mobile object 300 is capable of self-driving, and the travel route is a route on which mobile object 300 can travel by self-d riving.

Mobile object 300 is set, for example, at the level at which mobile object 300 can travel by self-driving without driver's operation (e.g., level 3 of the self-driving level). Mobile object 300 is capable of switching between self-driving (state in which mobile object 300 controls driving) and manual driving (state in which the driver controls driving). Note that mobile object 300 may be set at any self-driving level.

Information output system 500 includes determination device 100, storage device 200, mobile object 300, and output device 400.

Determination device 100 is a device that determines a returnable point that is a point from which mobile object 300 can return to the travel route, on the basis of the road information and/or the object information. Note that determination device 100 is an example of the information output device.

Note that "returnable" means, for example, that predetermined conditions are satisfied such as that: mobile object 300 can return to the travel route within a predetermined travel distance and/or a predetermined time; mobile object 300 can return to the travel route by a user's remote control; and/or mobile object 300 can return to the travel route by self-driving. Return route candidates are calculated, for example, on the basis of these predetermined conditions. It is then determined whether mobile object 300 can return to the travel route by traveling along the calculated return route candidates without violating the traffic rules and without contacting an object such as a pedestrian. It can be determined that mobile object 300 cannot return to the travel route, for example, when the following are applicable: mobile object 300 cannot return to the travel route by a user's remote control; mobile object 300 cannot return to the travel route by self-driving; and mobile object 300 can return to the travel route if a worker gets into and drives mobile object 300.

Determination device 100 is realized, for example, by means of a computer including: a communication interface for communicating with storage device 200, mobile object 300, and output device 400 included in information output system 500; a nonvolatile memory that stores a program; a volatile memory that is a transitory storage region used to execute the program; an input-output port for transmitting and receiving signals; a processor that executes the program, etc.

Determination device 100 includes obtainer 110, determiner 120, generator 130, and outputter 140.

Obtainer 110 is a processing unit that obtains various items of information such as the road information and the object information.

Obtainer 110 includes first obtainer 111 and second obtainer 112.

First obtainer 111 is a processing unit that obtains road information regarding a region that includes the travel route on which mobile object 300 travels (such region is hereinafter also referred to as "target region"). Note that the road information is an example of the first information.

The road information includes, for example, at least one of: rule information indicating the traffic rules in the target region; travelability information indicating whether mobile object 300 can travel in the target region; or distance information indicating the distance from the target region to the travel route. More specifically, the road information includes, for example, at least one of these items of information for each of a plurality of regions (also referred to as "individual regions") included in the target region. The road information is preliminarily stored, for example, in road information database 210 stored in storage device 200.

FIG. 2 is a diagram showing Example 1 of the road information according to the embodiment.

In the present example, as shown in FIG. 2, the road information includes: region ID information for identifying each of a plurality of individual regions included in the target region; type information indicating the type of the individual region; rule information indicating the traffic rules in the individual region; and travelability information indicating whether mobile object 300 can travel in the individual region. In the example shown in FIG. 2, the individual region whose region ID is defined as 102 is a region: whose type is roadway; a one-way road leading toward the individual region whose region ID is 101; and on which mobile object 300 can travel. Such road information of each of the individual regions, for example, is stored in road information database 210.

A global positioning system (GPS) receiver for obtaining the position information of mobile object 300, for example, is disposed in mobile object 300. For example, obtainer 110 obtains such position information from the GPS receiver and obtains the road information of each of the plurality of individual regions included in the target region that corresponds to the obtained position information.

Second obtainer 112 is a processing unit that obtains object information regarding an object that is present in the region. More specifically, second obtainer 112 obtains the object information regarding an object that is present in the target region and detected on the basis of information from sensor 310 included in mobile object 300. Stated differently, second obtainer 112 determines, for example, whether an object is present and the type of such object, on the basis of the detection result obtained by sensor 310 disposed in mobile object 300, and obtains the determination result as the object information. Note that the object information is an example of the second information. An object may be freely defined in advance as, for example, a pedestrian, a mobile object different from mobile object 300, a utility pole, a sign, etc.

The object information includes, for example, information detected by sensor 310 disposed in mobile object 300, indicating whether an object is present in the target region. More specifically, the object information includes, for example, information indicating whether an object is present in each of the plurality of individual regions.

FIG. 3 is a diagram showing the object information according to the embodiment.

In the present example, as shown in FIG. 3, the object information includes: region ID information for identifying each of the plurality of individual regions included in in the target region; type information indicating the type of an object; and object course information indicating the direction in which the object moves. In the example shown in FIG. 3, the object information indicates that an object whose type is pedestrian is present in the individual region whose region ID is defined as 100 and that such pedestrian is moving toward the individual region whose region ID is 104.

FIG. 4 is a diagram schematically showing the traveling of mobile object 300 in target region 700 according to the embodiment. FIG. 5 is a diagram for explaining the plurality of individual regions in target region 700 according to the embodiment.

As shown in FIG. 4, assume, for example, that pedestrian 600 is located in target region 700 when mobile object 300 is traveling in target region 700. As shown in FIG. 5, also assume, for example, that target region 700 is divided into a plurality of individual regions (region IDs: 93 through 108). In such a case, for example, the road information includes information as shown in the example in FIG. 2, and the object information includes information as shown in the example in FIG. 3.

Determiner 120 is a processing unit that makes a determination (calculation) regarding the return of mobile object 300 to the travel route from each of one or more individual regions (also referred to as "points"), in the target region, at which mobile object 300 is likely to stop, on the basis of at least one of the road information or the object information.

Generator 130 is a processing unit that generates return information regarding the return of mobile object 300 to the travel route from each of one or more individual regions (also referred to as "points"), in the target region, at which mobile object 300 is likely to stop, on the basis of at least one of the road information or the object information. Stated differently, generator 130 generates the return information on the basis of the determination result obtained by determiner 120. Note that the return information is an example of the third information.

The return information is, for example: returnability information indicating whether mobile object 300 can return to the travel route from an individual region; return time information indicating return time that is time taken by mobile object 300 to return to the travel route from the individual region; and/or shortest point information indicating the point, among the plurality of individual regions, from which the time taken to return to the travel route is the shortest. Determiner 120 makes a determination, for example, for each of the individual regions, and generator 130 generates the return information for each of the regions.

Note that the return information may also include stoppability information for each of the individual regions that is information indicating whether mobile object 300 can stop in the individual region.

The individual regions may be freely defined. For example, the plurality of individual regions subjected to the determination by determiner 120 includes the individual region in which mobile object 300 is located.

For example, generator 130 generates, as the return information, image information that represents, for example, text and graphics indicating the details of such return information.

Determiner 120 includes rule determiner 121, obstruction determiner 122, and return determiner 123.

Rule determiner 121 is a processing unit that determines whether mobile object 300 can stop in each of the individual regions, on the basis of the road information. The road information includes, for example, the foregoing rule information indicating traffic rules such as one-way road. Rule determiner 121 determines, for example, whether mobile object 300 can stop in the individual region, on the basis of the rule information. More specifically, rule determiner 121 determines whether the individual region is a region in which mobile object 300 can stop safely under the traffic rules.

Obstruction determiner 122 is a processing unit that determines whether mobile object 300 can stop in each of the individual regions, on the basis of the object information. The object information includes, for example, information indicating whether an object is present in the individual region and object course information indicating the direction in which the object moves, which is information included when the object is present. Obstruction determiner 122 determines, for example, whether mobile object 300 can stop in the individual region, on the basis of these items of information. More specifically, obstruction determiner 122 determines whether the individual region is a region in which the passage of other mobile objects (automobiles, bicycles, motorcycles, pedestrians, etc.) is obstructed.

As described above, determiner 120 determines, for example, whether mobile object 300 can stop in each of the individual regions, on the basis of at least one of the road information (more specifically, rule information) or the object information. Generator 130 generates, for example, the return information that indicates the determination result obtained by determiner 120, i.e., the return information that includes the stoppability information indicating whether mobile object 300 can stop.

Return determiner 123 is a processing unit that makes a determination regarding the return of mobile object 300 to the travel route from each of one or more individual regions, in the target region, at which mobile object 300 is likely to stop, on the basis of at least one of the road information or the object information.

For example, return determiner 123 determines whether mobile object 300 can return to the travel route from each of one or more individual regions, on the basis of at least one of the road information or the object information. More specifically, for example, return determiner 123 calculates a return route on which mobile object 300 returns to the travel route from the individual region, on the basis of the road information, and determines whether mobile object 300 can arrive at the travel route by traveling on such return route, on the basis of at least one of the road information or the object information. Further, when determining that mobile object 300 can arrive at the travel route, return determiner 123 determines that mobile object 300 can return to the travel route from the individual region, whereas when determining that mobile object 300 cannot arrive the travel route, return determiner 123 determines that mobile object 300 cannot return to the travel route. In this case, for example, generator 130 generates return information that includes returnability information indicating whether mobile object 300 can return to the travel route from each of one or more individual regions. For example, generator 130 generates, as the return information (more specifically, returnability information), information including image information that represents a region from which mobile object 300 can return to the travel route (returnable region) in a first color and a region from which mobile object 300 cannot return to the travel route (unreturnable region) in a second color that is different from the first color, among one or more individual regions.

Note that the first color and the second color are simply required to be different colors, and thus any colors may be used. For example, the entirety of each of the individual regions may be represented in the first color or the second color. Alternatively, for example, only the frame (line) that defines each of the individual regions may be represented in the first color or the second color. When only the frame is colored as in this case, for example, neither the returnable regions nor the unreturnable regions may be colored inside of the frames (regions defined by the frames). When these regions are superimposed on a schematic diagram as shown in FIG. 6, both the returnable regions and the unreturnable regions may be represented in the same color so that the schematic diagram is displayed.

Also, return determiner 123 may determine whether mobile object 300 can return to the travel route from each of one or more individual regions by self-driving, and generate return information that includes returnability information indicating whether mobile object 300 can return to the travel route from each of one or more individual regions by self-driving.

FIG. 6 is a diagram for explaining the returnable regions and the unreturnable regions according to the embodiment.

As shown in FIG. 6, for example, generator 130 generates, as the return information, image information that represents in the schematic diagram, etc. showing target region 700, the returnable regions and the unreturnable regions in different colors (differently hatched in FIG. 6). The image information generated by generator 130 is presented, for example, by presenter 410 included in output device 400.

Outputter 140 is a processing unit that outputs the return information. More specifically, outputter 140 outputs the return information to output device 400.

Note that each of the processing units such as obtainer 110, determiner 120, generator 130, and outputter 140 is realized, for example, by means of a memory storing a control program and a processor executing such control program. The function of each of these processing units is realized, for example, by means of the processor executing the control program stored in the memory.

Generator 130 may also generate the return information on the basis of not only the road information and the object information, but also other information.

For example, generator 130 generates the return information on the basis of at least one of the road information or the object information, and performance information indicating the traveling performance of mobile object 300. The performance information may be stored in storage device 200 and obtained from storage device 200. The performance information may also be stored in a recording unit (not shown) such as storage included in mobile object 300 and obtained from such recording unit. Alternatively, the performance information may be stored in a recording unit (not shown) such as storage included in determination device 100 and obtained from such recording unit.

Generator 130 also generates the return information, for example, on the basis of at least one of the road information or the object information, and traffic volume information indicating the traffic volume in the target region. The traffic volume information is obtained, for example, from a server device or an external device such as a vehicle information and communication system (VICS)° via a communication interface (not shown) included in determination device 100.

Storage device 200 is a storage device that stores various items of information used for the processing performed by determination device 100.

Storage device 200 is, for example, storage such as a hard disk drive (HDD) and a flash memory.

Storage device 200 stores, for example, road information database 210.

Road information database 210 is information regarding the road on which mobile object 300 travels and its surrounding regions. For example, road information database 210 includes the foregoing items of road information regarding various regions, e.g., the foregoing road information of each of the individual regions.

Note that storage device 200 may be a computer such as a server including storage that stores road information database 210. In this case, storage device 200 includes, for example, a communication interface for communicating with determination device 100. Also in this case, storage device 200 may be connected to determination device 100 to be able to communicate with determination device 100 wirelessly or by wire. For example, when connected to determination device 100 to be able to communicate with determination device 100 by wire, storage device 200 includes, as the communication interface, a connector, etc. that is connected to a communication line connected to determination device 100. Alternatively, when connected to determination device 100 to be able to communicate with determination device 100 wirelessly, for example, storage device 200 includes, as the communication interface, a wireless communication circuit, etc.

Mobile object 300 is a vehicle such as a motorcycle and an automobile. Note that, in the present embodiment, mobile object 300 is a vehicle that is remotely controlled by a user (operator) who operates output device 400, when mobile object 300 is traveling by self-driving along the predetermined travel route and caused to leave such travel route to stop. Stated differently, in the present embodiment, mobile object 300 operates by remote control performed by output device 400 that is connected at least via a network.

Mobile object 300 includes sensor 310 and mobile object controller 320.

Sensor 310 is a sensor for detecting an object located around mobile object 300. Sensor 310 includes, for example, an imaging device that captures an image of the surroundings of mobile object 300 and a distance measuring sensor that measures the position of an object located around mobile object 300 and the distance between the object and mobile object 300. Second obtainer 112 obtains, for example, the result of the imaging performed by the imaging device from sensor 310, and analyzes the image, etc. to identify the type of the object and determines the position and the moving direction of the object. With this, second obtainer 112 obtains the identification result and the determination result as object information. Note that these processes may be performed by sensor 310. In this case, second obtainer 112 obtains the object information from sensor 310.

Mobile object controller 320 is a processing unit that controls sensor 310 included in mobile object 300, and the driving mechanism including the engine and the steering used by mobile object 300 to travel by self-driving.

Mobile object controller 320 is realized, for example, by means of an electronic control unit (ECU) that includes a memory storing a control program, a processor executing such control program, and so forth.

Note that mobile object 300 includes, for example, a communication interface such as a wireless communication circuit for communicating with determination device 100 and output device 400.

Output device 400 is, for example, a computer system that presents the determination result obtained by determination device 100 to the user and receives an operation from the user to operate on the basis of the received operation. Output device 400 is an example of the terminal.

Output device 400 includes, for example, a touch panel display. Output device 400 may be a mobile computer, such as a smartphone and a tablet terminal used by the user, or may be a stationary computer, such as a personal computer, that includes an operation device such as a display, a mouse, and a keyboard. Such computer includes, for example: a communication interface for communicating with determination device 100 and mobile object 300; a nonvolatile memory that stores a program; a volatile memory that is a transitory storage region used to execute the program; an input-output port for transmitting and receiving signals; and a processor that executes the program.

Output device 400 includes presenter 410, operator 420, and output device controller 430.

Presenter 410 is a presentation device that presents the determination result obtained by determination device 100 (i.e., return information) to the user. Presenter 410 is, for example, a display, and presents the return information to the user by displaying an image.

As shown in FIG. 6, for example, presenter 410 displays information regarding each of the individual regions, such as information indicating whether mobile object 300 can return, that is superimposed on information such as a map showing target region 700. Alternatively, presenter 410 may display the determination result obtained by determination divide 100 by means of augmented reality (AR).

Note that presenter 410 may present the return information to the user, for example, in the form of voice. In this case, presenter 410 includes a sound device such as an amplifier and a speaker.

Operator 420 is an operation device that receives an operation from the user. Operator 420 includes, for example, a touch panel, a keyboard, and/or a mouse. In the present embodiment, mobile object 300 operates by being remotely controlled by output device 400 that is connected at least via a network. For example, output device 400 receives a user's operation at operator 420 and transmits the received result to mobile object 300. With this, mobile object 300 operates, for example, by being remotely controlled by the user. Operator 420 may include, for example, a steering wheel to facilitate remote controls of mobile object 300.

Output device controller 430 is a processing unit that controls various devices included in output device 400, such as presenter 410 and operator 420. Output device controller 430 is realized, for example, by means of a memory storing a control program and a processor executing such control program.

Note that determination device 100, storage device 200, and output device 400 may be disposed inside mobile object 300 (e.g., inside the body part of mobile object 300) or outside mobile object 300.

### [Processing Procedure]

The following describes the procedure of the processing performed by determination device 100. Note that, in the flowcharts of the examples described below, the same reference signs are assigned to substantially the same processes, and the description of the same processes can be simplified or omitted.

### <Example 1>

First, Example 1 of the procedure of the processing performed by determination device 100 is described. In Example 1, determination device 100 determines whether each of the individual regions is a region from which mobile object 300 can return to the travel route when mobile object 300 is stopped there, and generates and outputs return information including the determination result.

FIG. 7 is a flowchart showing Example 1 of the procedure of the processing performed by determination device 100 according to the embodiment.

First, assume that an event occurs that necessitates the stopping of mobile object 300 traveling along the travel route (S101). Assume, for example, that it becomes necessary to discontinue the self-driving of mobile object 300 to stop it due to, for example, the weather turning worse while mobile object 300 is traveling by self-driving. Determination device 100 obtains, for example, information indicating the weather conditions and information indicating the traffic volume, etc. from an external device such as a server device, and determines whether an event has occurred that necessitates the stopping of mobile object 300, on the basis of the obtained items of information.

Next, determination device 100 performs step S130 through step S180 to be described later for each of the individual regions (S120). For example, determination device 100 obtains the position information of mobile object 300 from, for example, the GPS receiver, to determine a region to be subjected to determination, on the basis of the position information, and performs the processes of step S130 through step S180 for each of one or more individual regions included in the determined region.

First obtainer 111 obtains the road information of an individual region from storage device 200 (S130).

Next, second obtainer 112 obtains the object information of the individual region from mobile object 300 (more specifically, sensor 310) (S140).

Next, return determiner 123 determines whether mobile object 300 can return to the travel route from the individual region, on the basis of the road information and the object information (S150).

When determining that mobile object 300 cannot return (No in S150), return determiner 123 determines that such individual region is an unreturnable region (S160).

Meanwhile, when determining that mobile object 300 can return (Yes in S150), return determiner 123 determines that such individual region is a returnable region (S170).

Next, outputter 140 outputs the determination result obtained by return determiner 123 to output device 400 (S180). More specifically, generator 130 generates return information indicating the determination result obtained by return determiner 123, and outputter 140 outputs the return information generated by generator 130 to output device 400. With this, the return information is presented to the user by presenter 410.

Note that, after S110, determination device 100 may collectively obtain items of road information and object information of the plurality of regions, on the basis of, for example, the position information of mobile object 300, and perform the processes of step S150 through step S170 for each of the individual regions without performing step S130 and step S140.

Determination device 100 may also perform the processes of step S130 through step S170 for each of the individual regions, and then collectively output the determination results on the respective individual regions in step S180.

FIG. 7A is a flowchart showing another example of Example 1 of the procedure of the processing performed by determination device 100 according to the embodiment. The flowchart shown in FIG. 7A is different from the flowchart shown in FIG. 7 in the repetition process in step S1000.

In the example shown in FIG. 7A, determination device 100 repeats the process of step S120, in which step S130 through step S180 are repeated, until the user's remote control is completed (S1000).

As described above, determination device 100 may repeat the calculation of a returnable region and an unreturnable region (determination on each region and output of the determination result), every time the situations around mobile object 300 change (i.e., real-time update).

FIG. 8 is a flowchart showing the procedure of the processing of returnability determination performed by determination device 100 according to the embodiment. More specifically, FIG. 8 is a flowchart showing the details of step S150 performed by return determiner 123.

First, return determiner 123 calculates one or more candidates for the return route (return route candidates) that are travel routes on which mobile object 300 returns to the travel route from the individual regions, on the basis of the road information (S210). For example, return determiner 123 calculates one or more return routes that satisfy return conditions such as that mobile object 300 can return to the travel route within a predetermined distance and/or within a predetermined time.

Note that the return conditions are not limited to the foregoing conditions, and thus may be freely defined such as that mobile object 300 travels on a road.

Next, return determiner 123 performs the processes of step S230 through step S250 to be described later, for each of the calculated return route candidates (S220).

Return determiner 123 determines whether the traffic rules are violated if mobile object 300 travels along the return route candidate, on the basis of the road information (e.g., the foregoing rule information) (S230). For example, return determiner 123 determines that the traffic rules are violated, when, for example, the traveling of mobile object 300 on the return route candidate, for example, is the traveling in the opposite direction on a one-way road.

When determining that the traffic rules are not violated if mobile object 300 travels along the return route candidate (No in S230), return determiner 123 then determines whether an object is present in the return route candidate, on the basis of the object information.

When determining that the traffic rules are violated if mobile object 300 travels along the return route candidate (Yes in S230), or when determining that an object is present in the return route candidate (Yes in S240), return determiner 123 deletes such return route candidate (S250).

Return determiner 123 performs step S230 through step S250 for each of the return route candidates, thereby deleting one or more of the calculated return route candidates as appropriate.

Next, return determiner 123 determines whether any return route candidate is present (S260). Stated differently, return determiner 123 determines whether at least one of the return route candidates calculated in step S210 remains without being deleted.

When determining that no return route candidate is present (No in S260), return determiner 123 determines that mobile object 300 cannot return to the travel route from the individual region (S270). Stated differently, the determination result obtained by return determiner 123 is No in step S150 in this case.

Meanwhile, when determining that at least one return route candidate is present (Yes in S260), return determiner 123 determines that mobile object 300 can return to the travel route from the individual region (S280). Stated differently, the determination result obtained by return determiner 123 is Yes in step S150 in this case.

Note that when no return route candidate that satisfies the foregoing return conditions can be calculated in step S210, return determiner 123 may proceed to the process of step S260 without performing step S220 through step S250.

### <Example 2>

The following describes Example 2 of the procedure of the processing performed by determination device 100. In Example 2, determination device 100 determines, for each of the individual regions, whether mobile object 300 can stop, determines whether the individual region determined to be a stoppable region is a region from which mobile object 300 can return to the travel route when mobile object 300 is stopped there, and generates and outputs return information including these determination results.

FIG. 9 is a diagram showing Example 2 of the road information according to the embodiment.

In present example, as shown in FIG. 9, the road information includes region ID information, type information, rule information, and travelability information. Also, in the present example, the rule information includes information indicating traveling rules such as one-way road (traveling rule information) and information indicating whether mobile object 300 can stop under the traffic rules (stop rule information). In the example shown in FIG. 9, the individual region whose region ID is defined as 102 is a region: whose type is roadway; a one-way road leading toward the individual region whose region ID is 101; on which mobile object 300 can travel; and on which mobile object 300 can stop under the traffic rules. For example, such road information of each the plurality of individual regions is stored in road information database 210.

In the present example, rule determiner 121 and obstruction determiner 122 determine whether mobile object 300 can stop in each of the individual regions, on the basis of at least one of the road information or the object information.

FIG. 10 is a diagram for explaining unstoppable regions according to the embodiment. Note that FIG. 10 is a diagram which corresponds to FIG. 6 and to which unstoppable regions are further illustrated in addition to the returnable regions and the unreturnable regions shown in FIG. 6. The following description assumes that region IDs of the individual regions shown in FIG. 10 are the same as the region IDs shown in FIG. 5.

As shown in FIG. 10, for example, generator 130 generates, as the return information, image information that represents, in the schematic diagram, etc. showing target region 700, the returnable regions, the unreturnable regions, and the unstoppable regions (regions in which mobile object 300 cannot stop) in different colors (differently hatched in FIG. 10).

Regarding the regions whose region IDs are 99 and 103, for example, determiner 121 determines that mobile object 300 cannot stop there under the traffic rules, because these regions are the central portion of the road on which vehicles other than mobile object 300 travel.

Also, regarding the regions whose region IDs are 100, 104, and 108, for example, obstruction determiner 122 determines that mobile object 300 cannot stop there due to that an object is present (or that an object can be present in the near future), because pedestrian 600 is located in these regions or these regions are located on the movement route (course) of pedestrian 600.

FIG. 11 is a flowchart showing Example 2 of the procedure of the processing performed by the determination device according to the embodiment.

First, assume that an event occurs that necessitates the stopping of mobile object 300 traveling along the travel route (S110).

Next, determination device 100 performs step S130 through step S180A, and step S310 through step S330 to be described later, for each of the individual regions (S120A).

First obtainer 111 obtains the road information of an individual region from storage device 200 (S130).

Next, second obtainer 112 obtains the object information of the individual region from mobile object 300 (S140).

Next, rule determiner 121 determines whether mobile object 300 can stop in the individual region under the traffic rules, on the basis of the road information (S310).

When determining that mobile object 300 cannot stop in the individual region under the traffic rules (No in S310), rule determiner 121 determines that such individual region is an unstoppable region (S330).

Meanwhile, when rule determiner 121 determines that mobile object 300 can stop in the individual region under the traffic rules (Yes in S310), obstruction determiner 122 determines whether any object obstruction is present in the individual region, on the basis of the object information (S320). For example, obstruction determiner 122 determines whether a pedestrian is present in the individual region, or whether the individual region is located in the moving direction of the pedestrian, i.e., whether the walking of the pedestrian will be obstructed.

When determining that an object obstruction is present in the individual region (Yes in S320), obstruction determiner 122 determines that such individual region is an unstoppable region (S330).

Meanwhile, when obstruction determiner 122 determines that no object obstruction is present in the individual region (No in S320), return determiner 123 determines whether mobile object 300 can return to the travel route from the individual region, on the basis of the road information and the object information (S150).

When determining that mobile object 300 cannot return (No in S150), return determiner 123 determines that such individual region is an unreturnable region (S160).

Meanwhile, when determining that mobile object 300 can return (Yes in S150), return determiner 123 determines that such individual region is a returnable region (S170).

Next, outputter 140 outputs the determination results obtained by rule determiner 121, obstruction determiner 122, and return determiner 123 to output device 400 (S180A). More specifically, generator 130 generates return information indicating the determination results obtained by rule determiner 121, obstruction determiner 122, and return determination 123. Outputter 140 then outputs the return information generated by generator 130 to output device 400. With this, the return information is presented to the user by presenter 410.

Note that, after S110, determination device 100 may collectively obtain items of road information and object information of the plurality of regions, on the basis of, for example, the position information of mobile object 300, and perform the processes of step S310 through step S180A for each of the individual regions without performing step S130 and step S140.

Alternatively, determination device 100 may perform the processes of step S130 through step S170 and step S310 through step S330 for each of the individual regions, and then collectively output the determination results on the respective individual regions in step S180A.

Also, step S310 and step S320 may be performed in reverse order. Stated differently, when the determination result obtained by obstruction determiner 122 is No in step S320, rule determiner 121 may perform the process of step S310.

FIG. 12 is a flowchart showing the procedure of the processing of rule allowability determination performed by determination device 100 according to the embodiment. More specifically, FIG. 12 is a flowchart showing the details of step S310 performed by rule determiner 121.

First, rule determiner 121 obtains rule information indicating the traffic rules of each of the individual regions (S410). For example, rule determiner 121 obtains the rule information included in the road information obtained by first obtainer 111 from storage device 200.

Next, rule determiner 121 determines whether mobile object 300 can stop in the individual region under the traffic rules, on the basis of the rule information (S420).

When determining that mobile object 300 cannot stop in the individual region under the traffic rules (No in S420), rule determiner 121 determines that such individual region is an unstoppable region (S430). Stated differently, the determination result obtained by rule determiner 121 is No in step S310 in this case.

Meanwhile, when determining that mobile object 300 can stop in the individual region under the traffic rules (Yes in S420), rule determiner 121 determines that such individual region is a stoppable region (S440). Stated differently, the determination result obtained by rule determiner 121 is Yes in step S310 in this case.

FIG. 13 is a flowchart showing the procedure of the processing of obstruction presence determination performed by the determination device according to the embodiment. More specifically, FIG. 13 is a flowchart showing the details of step S320 performed by obstruction determiner 122.

First, obstruction determiner 122 obtains object course information that is object-related information used to calculate the movement route of the object (S510). The object course information is, for example, time-series data of the position information of the object detected by sensor 310. For example, obstruction determiner 122 obtains, as the object course information, the position information of the object included in the object information obtained by second obtainer 112 from mobile object 300.

Next, on the basis of the object course information, obstruction determiner 122 calculates a predicted course that is the course through which the object is expected to move in the future (S520). For example, obstruction determiner 122 calculates, as the predicted course, an approximated curve of the n-th order ("n" is a natural number) of the temporal changes in the position information of the object.

Next, obstruction determiner 122 determines whether the individual region is present in the calculated predicted course (S530). Stated differently, obstruction determiner 122 determines whether the predicted course passes through (or reaches) the individual region. For example, obstruction determiner 122 determines that a region in which the object is located is a region that is present in the calculated predicted course.

When determining that the individual region is present in the calculated predicted course (Yes in S530), obstruction determiner 122 determines that mobile object 300 cannot stop in such individual region (S540). Stated differently, the determination result obtained by obstruction determiner 122 is Yes in step S320 in this case.

Meanwhile, when determining that the individual region is not present in the calculated predicted course (No in S530), obstruction determiner 122 determines that mobile object 300 can stop in such individual region (S550). Stated differently, the determination result obtained by obstruction determiner 122 is No in step S320 in this case.

### <Example 3>

The following describes Example 3 of the procedure of the processing performed by determination device 100. In Example 3, determination device 100 determines whether each of the individual regions is a region from which mobile object 300 can return to the travel route when mobile object 300 is stopped there, further calculates return time that is the time required for the return, and generates and outputs return information that includes the determination result and return time information indicating the return time.

FIG. 14 is a diagram showing Example 3 of the road information according to the embodiment.

In the present example, as shown in FIG. 14, the road information includes region ID information, type information, rule information, travelability information, and rush return time information indicating the time taken by a worker who is to get into and drive mobile object 300 to arrive at mobile object 300 (time required to rush over to mobile object 300 shown in FIG. 14), and distance information indicating the distance from the individual region to the travel route. In the example shown in FIG. 14, the individual region whose region ID is defined as 102 is a region: whose type is roadway; a one-way road leading toward the individual region whose region ID is 101; on which mobile object 300 can travel; on which mobile object 300 can stop under the traffic rules; the time taken by the worker to arrive at mobile object 300 (rush return time) is 600 seconds; and the distance to the travel route is 2 meters.

In the present example, return determiner 123 calculates the return time (remote return time) of an individual region determined to be a returnable region, on basis of the road information. For example, return determiner 123 calculates the return time from the distance information and a predetermined speed of mobile object 300. Such speed may be freely defined.

FIG. 15 is a diagram showing an example of the return time information displayed by output device 400 according to the embodiment. Note that FIG. 15 is a diagram which corresponds to FIG. 6. The following description assumes that the region IDs of the individual regions shown in FIG. 15 are the same as the region IDs shown in FIG. 5.

As shown in FIG. 15, generator 130 generates, as the return information, image information in which the returnable regions and the unreturnable regions are represented in different colors in the schematic diagram, etc. showing target region 700, and in which the remote return time is included as the return time for the returnable regions and the rush time is included as the return time for the unreturnable regions. For the individual region whose region ID is 94, for example, the remote return time is represented by the text "10 seconds" on presenter 410. Also, for the individual region whose region ID is 102, for example, the rush return time is represented by the text "600 seconds" on presenter 410.

Note that the return time information may include route information that indicates a route to a returnable region.

FIG. 15A is a diagram showing another example of the return time information displayed by output device 400 according to the embodiment.

A shown in FIG. 15A, for example, generator 130 generates, as the route information, a movement route on which mobile object 300 moves from the current position to a returnable region (e.g., shortest movement route) in the schematic diagram, etc. showing target region 700. Output device 400 displays, for example, an arrow that indicates the shortest route for mobile object 300 to the returnable region, on the basis of the route information included in the return time information. As described above, output device 400 may present the route to a returnable region, instead of or together with the remote return time.

FIG. 15B is a diagram showing another example of the return time information displayed by output device 400 according to the embodiment.

As shown in FIG. 15B, for example, generator 130 generates, as the route information, a movement route (e.g., shortest movement route) on which mobile object 300 moves from the current position to a stoppable region (in FIG. 15A, returnable region) in the schematic diagram, etc. showing target region 700. Output device 400 displays, for example, an arrow that indicates the shortest route for mobile object 300 to the stoppable region, on the basis of the route information included in the return time information. As described above, output device 400 may present the route to a stoppable region, instead of or together with the remote return time.

Note that the return time information may be presented to the user in any form. For example, the return time information may be superimposed onto an image generated by imaging the surroundings of mobile object 300 to be presented to the user.

FIG. 16 is a diagram showing another example of the return time information displayed by output device 400 according to the embodiment.

As shown in FIG. 16, for example, generator 130 may generate an image in which items of information indicating unreturnable regions (e.g., broken lines shown in FIG. 16) are superimposed on an image generated by imaging the surroundings of mobile object 300 and in which items of return time information are superimposed in the vicinity of such items of information. Generator 130 may then generate the return information including such generated image.

As described above, return determiner 123 calculates, for example, the return time that is taken by mobile object 300 to return to the travel route from each of one or more individual regions. Also, generator 130 generates, for example, return information including return time information that indicates the return time calculated by return determiner 123.

Note that generator 130 may generate the return information that includes shortest point information indicating the individual region, among one or more individual regions, from which the time taken to return to the travel route is the shortest.

The shortest point information may be presented in any form. For example, generator 130 may generate the return information that includes the shortest point information in which the individual region from which the time taken to return to the travel route is the shortest is represented in a color that is different from the color of the other regions. Alternatively, generator 130 may generate the return information that includes the shortest point information in which the text indicating the return time from the individual region from which the time taken to return to the travel route is the shortest is represented in a color that is different from the color of the text indicating the return time from the other regions. Alternatively, generator 130 may generate the return information that includes the shortest point information in which, for example, only the text indicating the return time from the individual region from which the time taken to return to the travel route is the shortest is enclosed by a line.

FIG. 16A is a diagram showing another example of the return time information displayed by output device 400 according to the embodiment.

As shown in FIG. 16A, for example, generator 130 may generate an image in which items of information indicating unreturnable regions (e.g., broken line ellipses shown in FIG. 16A) and information indicating a returnable region (e.g., dash-dotted line rectangle shown in FIG. 16A) are superimposed on an image generated by imaging the surroundings of mobile object 300 and in which items of return time information are superimposed in the vicinity of such items of information. Generator 130 may then generate the return information including such generated image.

As described above, output device 400 may present at least one of a returnable region or an unreturnable region.

Also, for example, generator 130 generates, as the route information, a movement route that is a route on which mobile object 300 moves from the current position to a returnable region (e.g., shortest movement route). Output device 400 displays, for example, an arrow that indicates the shortest route for mobile object 300 to the returnable region, on the basis of the route information included in the return time information. As described above, output device 400 may present the route to a returnable region that is superimposed on the image generated by imaging the surroundings of mobile object 300, instead of or together with the remote return time. Similarly, output device 400 may present the route to a stoppable region that is superimposed on an image generated by imaging the surroundings of mobile object 300, instead of or together with the remote return time. The foregoing forms of output performed by output device 400 (more specifically, display form) may be freely combined.

FIG. 17 is a flowchart showing Example 3 of the procedure of the processing performed by determination device 100 according to the embodiment.

First, assume that an event occurs that necessitates the stopping of mobile object 300 traveling along the travel route (S110).

Next, determination device 100 performs step S130 through step S180 and steps S610 through step S630 to be described later for each of the individual regions (S120B).

First obtainer 111 obtains the road information of an individual region from storage device 200 (S130).

Next, second obtainer 112 obtains the object information of the individual region from mobile object 300 (S140).

Next, return determiner 123 determines whether mobile object 300 can return to the travel route from the individual region, on the basis of the road information and the object information (S150).

When determining that mobile object 300 cannot return (No in S150), return determiner 123 determines that such individual region is an unreturnable region (S160).

Next, return determiner 123 calculates the rush return time of the individual region, on the basis of the road information (S610). In the present example, return determiner 123 obtains the rush return time information of the individual region included in the road information obtained by first obtainer 111.

Note that the rush return time may be calculated from the position at which the worker is staying, the position of mobile object 300, and the travel time of the worker per unit time. The road information may include, for example, information indicating the position at which worker is staying and the travel time of the worker per unit time. The road information may also include, for example, information indicating the position of each of the individual regions, such as coordinates. Return determiner 123 may calculate the rush return time, on the basis of these items of information and the information obtained from the GPS receiver, etc. such as the coordinates of the position of mobile object 300.

Meanwhile, when determining that mobile object 300 can return (Yes in S150), return determiner 123 determines that such individual region is a returnable region (S170).

Next, return determiner 123 calculates the remote return time of the individual region, on the basis of the road information (S620).

Next, outputter 140 outputs the determination result and the calculation results obtained by return determiner 123 to output device 400 (S630). More specifically, generator 130 generates return information indicating the determination result and the calculation results indicating the remote return time and the rush return time obtained by return determiner 123, and outputter 140 outputs the return information generated by generator 130 to output device 400. With this, the return information is presented to the user by presenter 410.

Note that, after S110, determination device 100 may collectively obtain items of road information and object information of the plurality of regions, on the basis of the position information of mobile object 300, for example, and perform the processes of step S150 through step S630 for each of the individual regions without performing step S130 and step S140.

Determination device 100 may also perform the processes of step S130 through step S620 for each of the individual regions, and then collectively output the determination results on the respective individual regions in step S630.

### <Variation>

The following describes a variation of the procedure of the processing of returnability determination performed by determination device 100. In the variation, determination device 100 further determines whether mobile object 300 needs to move backward when returning to the travel route, in addition to determining whether to delete return route candidates.

FIG. 18 is a flowchart showing a variation of the procedure of the processing of returnability determination performed by determination device 100 according to the embodiment. More specifically, FIG. 18 is a flowchart showing another example of the details of step S150 performed by return determiner 123.

First, return determiner 123 calculates one or more return route candidates on which mobile object 300 returns to the travel route from the individual regions, on the basis of the road information (S210).

Next, return determiner 123 performs the processes of step S230 through step S250 and the processes of step S710 through step S720 to be described later for each of the calculated return route candidates (S220A).

Return determiner 123 determines whether mobile object 300 needs to move backward if mobile object 300 is caused to travel along the return route of the return route candidate to return to the travel route (S710).

When determining that mobile object 300 needs to move backward (Yes in S710), return determiner 123 determines whether the distance for which mobile object 300 moves backward (backward distance) is greater than or equal to a predetermined distance (S720). The predetermined distance is not limited to a specific distance and thus may be freely defined. Information indicating the predetermined distance may be stored in storage device 200 and obtained by first obtainer 111.

When determining that the backward distance is greater than or equal to the predetermined distance (Yes in S720), return determiner 123 deletes such return route candidate (S250).

When determining that mobile object 300 does not need to move backward (No in S710), or when determining that the backward distance is less than the predetermined distance (No in S720), return determiner 123 determines whether the traffic rules are violated if mobile object 300 travels along the return route candidate, on the basis of the road information (S230).

As described above, return determiner 123 determines, for example, whether mobile object 300 needs to move backward before returning to the travel route from each of one or more regions, and determines whether mobile object 300 can return to the travel route from the point, on the basis of the determination result indicating whether mobile object 300 needs to move backward. More specifically, when determining that mobile object 300 does not need to move backward, for example, return determiner 123 determines that mobile object 300 can return to the travel route from the individual region. Meanwhile, when determining that mobile object 300 needs to move backward, for example, return determiner 123 calculates the backward distance for which mobile object 300 moves backward before returning to the travel route from the individual region. Further, when the backward distance is greater than or equal to the predetermined distance, for example, return determiner 123 determines that mobile object 300 cannot return to the travel route from the point (stated differently, deletes return route candidate). Meanwhile, when the backward distance is less than the predetermined distance, return determiner 123 determines that mobile object 300 can return to the travel route from the individual region (stated differently, does not delete return route candidate).

When determining that the traffic rules are not violated even if mobile object 300 travels along the return route candidate (No in S230), return determiner 123 then determines whether an object is present in such return route candidate, on the basis of the object information.

When determining that the traffic rules are violated if mobile object 300 travels along the return route candidate (Yes in S230), or when determining that an object is present in the return route candidate (Yes in S240), return determiner 123 deletes such return route candidate (S250).

Next, return determiner 123 determines whether any return route candidate is present (S260).

When determining that no return route candidate is present (No in S260), return determiner 123 determines that mobile object 300 cannot return to the travel route from such individual region (S270).

Meanwhile, when determining that at least one return route candidate is present (Yes in S260), return determiner 123 determines that mobile object 300 can return to the travel route from such individual region (S280).

### [Summary]

The information output device, an example of which is determination device 100 described above, performs the processing described below.

FIG. 19 is a flowchart showing the procedure of processing performed by the information output device according to the embodiment. Stated differently, FIG. 19 is a flowchart showing an information output method for use in the information output device according to the embodiment (stated differently, the method performed by the information output device), i.e., the information output method according to the embodiment.

First, the information output device obtains first information regarding a region that includes the travel route on which mobile object 300 travels (S10). The first information is, for example, the road information described above.

Next, the information output device obtains second information regarding an object that is present in the region (S20). The second information is, for example, the object information described above.

Next, the information output device generates, for each of one or more points in the region, third information regarding the return of mobile object 300 to the travel route from the point, on the basis of at least one of the first information or the second information, where one or more points are points at which mobile object 300 is likely to stop (S30). The information output device may determine whether the region is a stoppable region, for example, on the basis of the rule information described above or the object information described above. The information output device outputs, for example, information indicating the determination result as the third information. The third information may be, for example, the return information described above.

Next, the information output device outputs the third information (S40). The information output device outputs the third information onto, for example, a display included in the information output device or an external device, thereby presenting (e.g., displaying) the third information to the user.

With this, information regarding the return to the travel route on which mobile object 300 was originally traveling is outputted, when mobile object 300 is stopped. Output device 400 such as a display presents, to the user who drives and stops mobile object 300, the information regarding the return. This enables the user to have a grasp of a point from which mobile object 300 can efficiently return to the travel route, such as a point from which the return route is short or a point from which the time taken to return to the travel route is short. Thus, with the information output method according to an aspect of the present disclosure, it is possible to appropriately select a point from which mobile object 300 can efficiently return to the travel route, thereby enabling mobile object 300 to travel efficiently.

Also, for example, in the generating of the third information (S30), the information output device determines whether mobile object 300 can return to the travel route from each of one or more points, on the basis of at least one of the first information or the second information, and generates the third information including returnability information indicating whether mobile object 300 can return to the travel route from the point.

With this, it is possible to appropriately select a point from which mobile object 300 can return to the travel route. Assume the case where, for example, the user stops mobile object 300 in an unreturnable region from which mobile object 300 cannot return to the travel route by self-driving and from which it is difficult to return to the travel route by remote control. In this case, the user needs to make a request of a rush worker who rushes over to mobile object 300 to get into and drive mobile object 300, and such worker needs gets into mobile object 300 to cope with the situation. Meanwhile, in the case where the user stops mobile object 300 in a returnable region from which mobile object 300 can return to the travel route by self-driving or by remote control, there is no need, for example, for the rush worker nor for making a request of the rush worker to cope with the situation.

Also, for example, mobile object 300 is capable of self-driving, and the travel route is a route on which mobile object 300 can travel by self-driving. In the generation of the third information, the information output device determines, for each of the one or more points, whether mobile object 300 can return to the travel route from the point by self-driving, and generates the third information that includes the returnability information indicating whether mobile object 300 can return to the travel route from the point by self-d riving.

With this, it is possible to appropriately stop mobile object 300 at a point from which mobile object 300 can return to the travel route by self-driving, even when mobile object 300 has become unable to travel by self-driving.

Also, for example, in the generation of the third information, the information output device calculates, for each of the one or more points, a return route on which mobile object 300 returns to the travel route from the point, based on the first information, and determines whether mobile object 300 can arrive at the travel route by traveling on the return route, based on at least one of the first information or the second information. The information output device determines that mobile object 300 can return to the travel route from the point, when determining that mobile object 300 can arrive at the travel route, and determines that mobile object 300 cannot return to the travel route, when determining that mobile object 300 cannot arrive at the travel route.

With this, it is possible to appropriately determine a point from which mobile object 300 can return to the travel route.

Also, for example, in the generation of the third information, the information output device determines, for each of the one or more points, whether mobile object 300 needs to move backward before mobile object 300 returns to the travel route from the point, and determines whether mobile object 300 can return to the travel route from the point, based on the determination result indicating whether mobile object 300 needs to move backward.

Also, for example, the information output device determines that mobile object 300 can return to the travel route from the point, when the determination result is that mobile object 300 does not need to move backward, and calculates a backward distance that is a distance for which mobile object 300 moves backward before returning to the travel route from the point, when the determination result is that mobile object 300 needs to move backward. The information output device determines that mobile object 300 cannot return to the travel route from the point, when the backward distance is greater than or equal to a predetermined distance, and determines that mobile object 300 can return to the travel route from the point, when the backward distance is less than predetermined distance.

With these, it is possible to appropriately select a point from which mobile object 300 can return to the travel route, without depending on the driving skills of the user who drives mobile object 300.

Also, for example, in the generation of the third information, the information output device determines, for each of the one or more points, whether mobile object 300 can stop at each of the point, based on at least one of the first information or the second information, and generates the third information that includes stoppability information indicating whether mobile object 300 can stop at the point.

With this, it is possible to stop mobile object 300 at an appropriate point, avoiding a point at which mobile object 300 cannot stop under the traffic rules or due to the presence of an object.

Also, for example, in the generation of the third information, the information output device calculates, for each of the one or more points, return time that is the time taken by mobile object 300 to return to the travel route from the point, and generates the third information that includes return time information indicating the return time.

With this, it is possible to appropriately select a point from which mobile object 300 can return to the travel route in a time-efficient manner. For example, it is possible for the user to compare the return time required for the return by the rush worker and the return time taken for autonomous return to determine the shorter return time.

Also, for example, in the generation of the third information, the information output device generates the third information that includes shortest point information indicating a point, among the one or more points, from which time taken to return to the travel route is shortest.

With this, by presenter 410 presenting the shortest point information to the user, it becomes easier for the user to have a grasp of a point from which mobile object 300 can return to the travel route in the most time-efficient manner.

Also, for example, in the generation of the third information, the information output device generates the third information, based on at least one of the first information or the second information, and performance information indicating traveling performance of mobile object 300.

With this, it is possible to more appropriately select a point from which mobile object 300 can return to the travel route, in accordance with the performance of mobile object 300.

Also, for example, in the generation of the third information, the information output device generates the third information, based on at least one of the first information or the second information, and traffic volume information indicating a traffic volume in the region.

Depending on the traffic volume, there can be the case where mobile object 300 can and cannot travel by self-driving, such as in the case where mobile object 300 cannot travel by self-driving in a region having a large traffic volume. Stated differently, there are regions in which the return by means of self-driving is possible and impossible, depending on the traffic volume. As such, the foregoing configuration enables a more appropriate selection of a point from which mobile object 300 can return to the travel route, in accordance with the traffic volume.

Also, for example, the first information includes at least one of: rule information indicating a traffic rule in the region; travelability information indicating whether mobile object 300 can travel in the region; or distance information indicating a distance from the region to the travel route.

With this, it is possible, for example, to appropriately select a point from which mobile object 300 can return to the travel route, on the basis of the first information.

Also, for example, the second information indicates whether the object is present in the region, the object being detected by sensor 310 disposed in mobile object 300.

With this, it is possible, for example, to appropriately select a point from which mobile object 300 can return to the travel route, on the basis of the second information.

Also, for example, the one or more points include a point at which mobile object 300 is located.

With this, it is possible to appropriately determine whether any trouble occurs if, for example, mobile object 300 is stopped urgently.

Also, for example, in the generation of the third information, the information output device generates the third information that includes image information in which, among the one or more points, a point from which mobile object 300 can return to the travel route is represented in a first color and a point from which mobile object 300 cannot return to the travel route is represented in a second color that is different from the first color.

With this, by presenter 410 presenting the image information to the user who drives and stops mobile object 300, it becomes easier for the user to have an intuitive grasp of points from which mobile object 300 can and cannot return to the travel route.

Also, for example, mobile object 300 operates by remote control performed by a terminal that is connected at least via a network, and in the output of the third information, the information output device outputs the third information to the terminal.

With this, it is possible to stop mobile object 300 at a point from which mobile object 300 can return to the travel route even by remote control.

Also, the information output device may be realized, for example, by means of a memory storing a control program for executing the foregoing processes and a processor executing such control program. More specifically, the information output device according to the embodiment includes: first obtainer 111 that obtains first information regarding a region that includes a travel route on which mobile object 300 travels; second obtainer 112 that obtains second information regarding an object that is present in the region; generator 130 that generates, for each of one or more points in the region, third information regarding a return of mobile object 300 to the travel route from the point, based on at least one of the first information or the second information, the one or more points being points at which mobile object 300 is likely to stop; and outputter 140 that outputs the third information.

With this, it is possible to achieve the same effects as those achieved by the information output method described above.

### [Other Embodiment]

The information output method and the information output device according to one or more aspects of the present disclosure have been described above on the basis of the embodiment, but the present disclosure is not limited to the foregoing embodiment. The scope of one or more aspects of the present disclosure may also include an embodiment formed by making various modifications to the embodiment that can be conceived by those skilled in the art and an embodiment formed by combining elements and various processes in different embodiments, e.g., Example 1 through Example 3, and the variation described above, without departing from the essence of the present disclosure.

For example, the information output device may not include rule determiner 121.

Also, for example, the information output device may not include obstruction determiner 122.

Also, for example, sensor 310 may be disposed not in mobile object 300 but in a construction material such as a utility pole.

Also, in the description of the foregoing embodiment, the processes of step S120 and thereafter are performed when an event occurs in step S110 as shown, for example, in FIG. 7. However, the processes of step S120 and thereafter may be performed on the basis of a condition other than that shown in step S110 or may be performed without any conditions. For example, step S110 may not be performed.

Also, in the foregoing embodiment, for example, FIG. 16 shows an example in which unreturnable regions are presented, but a returnable region may be presented, and both unreturnable regions and a returnable region may be presented.

Also, the foregoing embodiment shows an example in which information output system 500 includes determination device 100, storage device 200, mobile object 300, and output device 400, but the information output system according to the present disclosure may also be realized in the form of a single device such as a vehicle. In this case, for example, each of the processing units included in determination device 100 such as determiner 120, and mobile object controller 320 and output device controller 430 may be realized by means of the same memory, processor, etc.

Also, for example, the travel route is a route on which mobile object 300 travels by self-driving, but may also be a route calculated by, for example, a navigation system.

Also, for example, mobile object 300 may be not a remotely-controlled vehicle but a vehicle driven by the user riding on mobile object 300. In this case, for example, when determination device 100 obtains an instruction from the user at an operator such as a touch panel (not shown) included in determination device 100, determination device 100 may generate, for each of one or more points in the target region, the third information regarding the return of mobile object 300 to the travel route from the point that is a travel route calculated by the navigation system, etc., on the basis of at least one of the first information or the second information, where one or more points are points at which mobile object 300 is likely to stop. Output device 400 may be disposed in mobile object 300 and present the third information generated in such manner.

Also, the expressions described above such as "greater than or equal to" and "less than" are used to mean the comparison with respect to, for example, a threshold. As such, these expressions may be replaced, for example, with "greater than" and "less than or equal to".

Also, for example, when mobile object 300 can travel by self-driving, a point at which mobile object 300 is caused to stop may be determined, on the basis of the third information, and mobile object 300 may move to such determined point.

Also, for example, the present disclosure can be realized in the form of a program for causing a processor to execute the steps included in the information output method. Further, the present disclosure can be realized in the form of a non-transitory, computer-readable recording medium such as a CD-ROM having recorded thereon such program.

When the present disclosure is realized in the form of a program (software), for example, the steps are executed by the program being executed, using hardware resources of the computer, such as a central processing unit (CPU), a memory, and an input-output circuit. Stated differently, the steps are executed by the CPU obtaining data from, for example, the memory or the input-output circuit to perform calculations, and outputting calculation results to, for example, the memory or the input-output circuit.

In the foregoing embodiment, each of the elements included in the information output device may be configured in the form of an exclusive hardware product, or may be realized by executing a software program suitable for the element. Each of the elements may be realized by means of a program executing unit, such as a CPU and a processor, reading and executing the software program recorded on a recording medium such as a hard disk or a semiconductor memory.

Note that some or all of the functions of the information output device according to the embodiment may be realized in the form of an LSI, which is typically an integrated circuit. These may take the form of individual chips, or may be encapsulated into a single chip to include some or all of the functions. Also, some or all of the functions are not limited to being integrated in the form of an LSI, and thus may be realized in the form of an exclusive circuit or a general-purpose processor. Also, a field programmable gate array (FPGA) that allows for programming after the manufacture of an LSI may be used or a reconfigurable processor that allows for reconfiguration of the connection and the settings of circuit cells inside an LSI may be used.

The present disclosure further includes variations achieved by making modifications to the embodiment of the present disclosure that can be conceived by those skilled in the art without departing from the essence of the present disclosure.

### [Industrial Applicability]

The present disclosure is applicable, for example, to mobile objects such as remotely controlled self-driving vehicles.

### [Reference Signs List]

- 100: determination device
- 110: obtainer
- 111: first obtainer
- 112: second obtainer
- 120: determiner
- 121: rule determiner
- 122: obstruction determiner
- 123: return determiner
- 130: generator
- 140: outputter
- 200: storage device
- 210: road information database
- 300: mobile object
- 310: sensor
- 320: mobile object controller
- 400: output device
- 410: presenter
- 420: operator
- 430: output device controller
- 500: information output system
- 600: pedestrian
- 700: target region

## Claims

1. An information output method for use in an information output device, the information output method comprising:
obtaining first information regarding a region that includes a travel route on which a mobile object travels;
obtaining second information regarding an object that is present in the region;
generating, for each of one or more points in the region, third information regarding a return of the mobile object to the travel route from the point, based on at least one of the first information or the second information, the one or more points being points at which the mobile object is likely to stop; and
outputting the third information.

2. The information output method according to claim 1,
wherein the generating of the third information includes:
determining, for each of the one or more points, whether the mobile object can return to the travel route from the point, based on at least one of the first information or the second information; and
generating the third information that includes returnability information indicating whether the mobile object can return to the travel route from the point.

3. The information output method according to claim 2,
wherein the mobile object is capable of self-driving,
the travel route is a route on which the mobile object can travel by self-driving, and
the generating of the third information includes:
determining, for each of the one or more points, whether the mobile object can return to the travel route from the point by self-driving; and
generating the third information that includes the returnability information indicating whether the mobile object can return to the travel route from the point by self-driving.

4. The information output method according to claim 2 or 3,
wherein the generating of the third information includes:
calculating, for each of the one or more points, a return route on which the mobile object returns to the travel route from the point, based on the first information;
determining whether the mobile object can arrive at the travel route by traveling on the return route, based on at least one of the first information or the second information;
determining that the mobile object can return to the travel route from the point, when it is determined that the mobile object can arrive at the travel route; and
determining that the mobile object cannot return to the travel route, when it is determined that the mobile object cannot arrive at the travel route.

5. The information output method according to any one of claims 2 to 4,
wherein the generating of the third information includes:
determining, for each of the one or more points, whether the mobile object needs to move backward before the mobile object returns to the travel route from the point; and
determining whether the mobile object can return to the travel route from the point, based on a result of the determining indicating whether the mobile object needs to move backward.

6. The information output method according to claim 5,
wherein the generating of the third information includes:
determining that the mobile object can return to the travel route from the point, when the result of the determining is that the mobile object does not need to move backward;
calculating a backward distance that is a distance for which the mobile object moves backward before returning to the travel route from the point, when the result of the determining is that the mobile object needs to move backward;
determining that the mobile object cannot return to the travel route from the point, when the backward distance is greater than or equal to a predetermined distance; and
determining that the mobile object can return to the travel route from the point, when the backward distance is less than predetermined distance.

7. The information output method according to any one of claims 1 to 6,
wherein the generating of the third information includes:
determining, for each of the one or more points, whether the mobile object can stop at each of the point, based on at least one of the first information or the second information; and
generating the third information that includes stoppability information indicating whether the mobile object can stop at the point.

8. The information output method according to any one of claims 1 to 7,
wherein the generating of the third information includes:
calculating, for each of the one or more points, return time that is time taken by the mobile object to return to the travel route from the point; and
generating the third information that includes return time information indicating the return time.

9. The information output method according to claim 8,
wherein the generating of the third information includes:
generating the third information that includes shortest point information indicating a point, among the one or more points, from which time taken to return to the travel route is shortest.

10. The information output method according to any one of claims 1 to 9,
wherein the generating of the third information includes:
generating the third information, based on at least one of the first information or the second information, and performance information indicating traveling performance of the mobile object.

11. The information output method according to any one of claims 1 to 10,
wherein the generating of the third information includes:
generating the third information, based on at least one of the first information or the second information, and traffic volume information indicating a traffic volume in the region.

12. The information output method according to any one of claims 1 to 11,
wherein the first information includes at least one of: rule information indicating a traffic rule in the region; travelability information indicating whether the mobile object can travel in the region; or distance information indicating a distance from the region to the travel route.

13. The information output method according to any one of claims 1 to 12,
wherein the second information indicates whether the object is present in the region, the object being detected by a sensor disposed in the mobile object.

14. The information output method according to any one of claims 1 to 13,
wherein the one or more points include a point at which the mobile object is located.

15. The information output method according to any one of claims 1 to 14,
wherein the generating of the third information includes:
generating the third information that includes image information in which, among the one or more points, a point from which the mobile object can return to the travel route is represented in a first color and a point from which the mobile object cannot return to the travel route is represented in a second color that is different from the first color.

16. The information output method according to any one of claims 1 to 15,
wherein the mobile object operates by remote control performed by a terminal that is connected at least via a network, and
the outputting of the third information includes outputting the third information to the terminal.

17. An information output device comprising:
a first obtainer that obtains first information regarding a region that includes a travel route on which a mobile object travels;
a second obtainer that obtains second information regarding an object that is present in the region;
a generator that generates, for each of one or more points in the region, third information regarding a return of the mobile object to the travel route from the point, based on at least one of the first information or the second information, the one or more points being points at which the mobile object is likely to stop; and
an outputter that outputs the third information.
